# EUROPEAN PATENT APPLICATION

(11) **EP 1 744 253 A1**
(43) Date of publication of application: **17.01.2007**
(21) Application number: 05728478.8
(22) Date of filing: 06.04.2005
(51) Int. Cl.: G06F 17/21

(54) **DOCUMENT PROCESSING DEVICE AND DOCUMENT PROCESSING METHOD**

(30) Priority: 08.04.2004 JP 2004114529
(71) Applicant: JustSystems Corporation, Tokushima-shi, Tokushima 771-0189 (JP)
(72) Inventor: HIYAMA, Masayuki, Meguro-ku, Tokyo 153-0051 (JP); WAKE, Nobuaki JUSTSYSTEMS CORPORATION, Tokushima-shi, Tokushima 771-0189 (JP); OSHIMA, Norio JUSTSYSTEMS CORPORATION, Tokushima-shi, Tokushima 771-0189 (JP)
(74) Representative: Palmer, Jonathan R.
(86) International application number: PCT/JP2005/006800
(87) International publication number: WO 2005/098662

(57) **Abstract**

The present invention enables a document described in multiple markup languages to be appropriately processed. A document processing apparatus 100 provides display/editing systems such as an HTML unit 150 for displaying/editing an HTML document, an SVG unit 160 for displaying/editing an SVG document, etc., capable of supporting different vocabularies using plug-ins. In the case of processing a document described in a vocabulary that is not supported by any one of the installed plug-ins, a VC unit 180 maps the document to a vocabulary that enables the document to be displayed, e.g., HTML or SVG. This allows the document to be displayed and edited using the HTML unit 150 or the SVG unit 160. The document processing apparatus 100 displays a document described in multiple vocabularies using corresponding plug-ins, and this allows the user to edit the document.

## Description

### Technical Field

The present invention relates to a document processing technique, and particularly to a document processing apparatus and a document processing method for processing a document described in a markup language.

### Background Art

The XML format has been attracting attention as a format that allows the user to share data with other users via a network. This promotes the development of applications for creating, displaying, and editing XML documents (see Patent document 1, for example). The XML documents are created based upon a vocabulary (tag set) defined according to a document format definition..
[Patent Document 1]
Japanese Patent Application Laid-open No. 2001-290804

### Disclosure of Invention

### [Problems to be Solved by the Invention]

The XML technique allows the user to define vocabularies as desired. This allows a limitless number of vocabularies to be created. In theory, the XML technique allows multiple vocabularies to be used to describe parts of a single XML document. However, the XML technique has not yet provided an established method for appropriately processing such a compound document.

The present invention has been made in view of the aforementioned problems. Accordingly, it is an object thereof to provide a technique for appropriately processing a document described in multiple markup languages.

### [Means for Solving the Problems]

An aspect of the present invention relates to a document processing apparatus. The document processing apparatus comprises multiple processing systems for processing a document described in a predetermined markup language. With such an arrangement, a document described in multiple kinds of markup languages is displayed on a single screen using the processing systems corresponding to said markup languages, allowing a user to edit the document.

The markup language employed in the present invention may be a form of XML. Examples of such forms of XML include XHTML, SVG, MathML, etc. Further examples include SGML, HTML, etc. Such an arrangement enables a compound document described in multiple different kinds of markup languages to be processed. This allows the user to create a document with more flexible structure, thereby improving the ease-of-use for the user.

The document processing apparatus may further include a conversion unit. With such an arrangement, in the case that the markup languages used for describing the document include a markup language which cannot be handled by any one of the processing systems, the conversion unit performs a mapping of the part of the document described in the particular markup language to another markup language supported by the processing systems. With such an arrangement, the document thus converted can be processed by corresponding dedicated processing systems. This enables a document to be properly displayed and edited even if the document contains a part described in a particular markup language that cannot be handled by any one of the processing systems prepared beforehand.

Also, an arrangement may be made in which, in a case that the markup languages used for describing the document include a markup language which cannot be handled by any one of the processing systems, the part of the document described in the particular markup language is displayed in the form of a source display or a tree display.

Also, an arrangement may be made in which an editing menu is provided by a corresponding processing system for handling a particular markup language used for describing the part of the document corresponding to the current editing position. Such an arrangement provides an appropriate editing environment that corresponds to the current editing position.

The document processing apparatus may refer to a part of a document which is described in a particular markup language, and which itself is a part of a document described in multiple kinds of markup languages. Any markup language used for describing a document essentially provides a text-based document. This allows the data to be accessed even if a corresponding dedicated processing system has not been prepared. Accordingly, reference may be made to data over multiple parts of the document, which are described in different languages, and which are components of a compound document described in multiple markup languages. Such an arrangement allows the user to create a document having a flexible structure, thereby improving the ease-of-use for the user.

Another aspect of the present invention relates to a document processing method for displaying a document described in multiple kinds of markup languages on a single screen using processing systems corresponding to the respective markup languages, allowing the user to edit the document.

Note that any combination of the aforementioned components or any manifestation of the present invention realized by modification of a method, device, system, and so forth, is effective as an embodiment of the present invention.

### [Advantages]

The present invention provides a technique for appropriately processing a document described in multiple markup languages.

### Brief Description of the Drawings

FIG. 1 is a diagram which shows a configuration of a document processing apparatus according to an embodiment.
FIG. 2 is a diagram which shows an example of an XML document which is to be edited by the document processing apparatus.
FIG. 3 is a diagram which shows an example in which the XML document shown in FIG. 2 is mapped to a table described in HTML.
FIG. 4 is a diagram which shows an example of a definition file used for mapping the XML document shown in FIG. 2 to the table shown in FIG. 3.
FIG. 5 is a diagram which shows an example of a screen on which the XML document shown in FIG. 2 is displayed after having been mapped to HTML according to the correspondence shown in FIG. 3.
FIG. 6 is a diagram which shows an example of a graphical user interface provided to the user from a definition file creating unit, which allows the user to create a definition file.
FIG. 7 is a diagram which shows another example of a screen layout created by the definition file creating unit.
FIG. 8 is a diagram which shows an example of an editing screen for an XML document, as provided by the document processing apparatus.
FIG. 9 is a diagram which shows another example of an XML document which is to be edited by the document processing apparatus.
FIG. 10 is a diagram which shows an example of a screen on which the document shown in FIG. 9 is displayed.

### Reference Numerals

- 100: document processing apparatus
- 110: main control unit
- 120: editing unit
- 130: DOM unit
- 132: DOM provider
- 134: DOM builder
- 136: DOM writer
- 140: CSS unit
- 150: HTML unit
- 160: SVG unit
- 180: VC unit
- 182: mapping unit
- 184: definition file acquiring unit
- 186: definition file generator

### Best Mode for Carrying Out the Invention

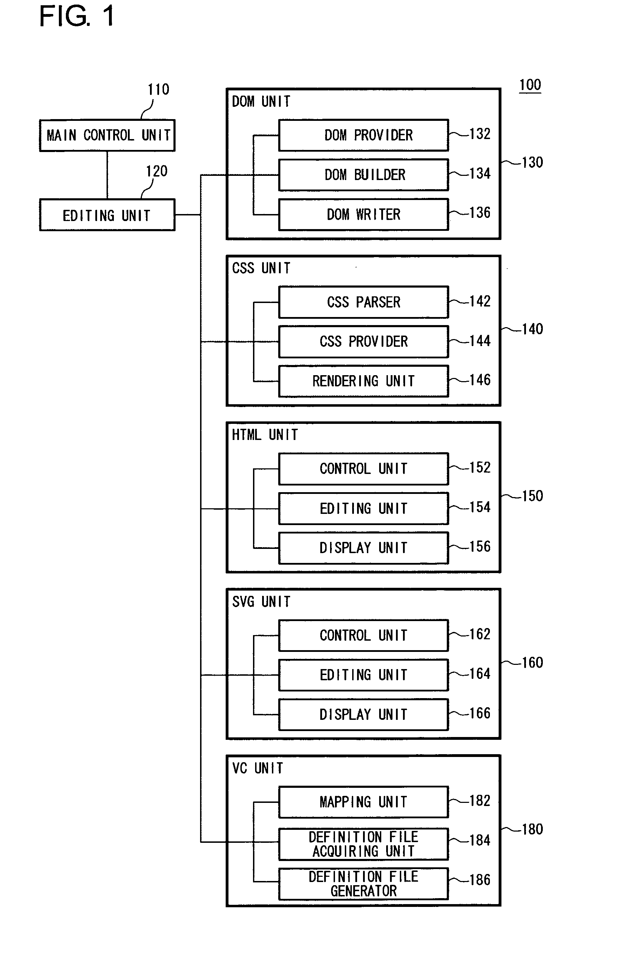

FIG. 1 illustrates a structure of a document processing apparatus 100 according to an exemplary but non-limiting embodiment of the present invention. The document processing apparatus 100 processes a structured document where data in the document are classified into a plurality of components having a hierarchical structure. Represented in the present embodiment is an example in which an XML document, as one type of a structured document, is processed. The document processing apparatus 100 is comprised of a main control unit 110, an editing unit 120, a DOM unit 130, a CSS unit 140, an HTML unit 150, an SVG unit 160 and a VC unit 180 which serves as an example of a conversion unit. In terms of hardware components, these unit structures may be realized by any conventional processing system or equipment, including a CPU or memory of any computer, a memory-loaded program, or the like. Here, the drawing shows a functional block configuration which is realized by cooperation between the hardware components and software components. Thus, it would be understood by those skilled in the art that these function blocks can be realized in a variety of forms by hardware only, software only or the combination thereof.

The main control unit 110 provides for the loading of a plug-in or a framework for executing a command. The editing unit 120 provides a framework for editing XML documents. Display and editing functions for a document in the document processing apparatus 100 are realized by plug-ins, and the necessary plug-ins are loaded by the main control unit 110 or the editing unit 120 according to the type of document under consideration. The main control unit 110 or the editing unit 120 determines which vocabulary or vocabularies describe the content of an XML document to be processed, by referring to a name space of the document to be processed, and loads a plug-in for display or editing corresponding to the thus determined vocabulary so as to execute the display or the editing. For instance, an HTML unit 150, which displays and edits HTML documents, and an SVG unit 160, which displays and edits SVG documents, are implemented in the document processing apparatus 100. That is, a display system and an editing system are implemented as plug-ins for each vocabulary (tag set), so that when an HTML document and an SVG document are edited, the HTML unit 150 and the SVG unit 160 are loaded, respectively. As will be described later, when compound documents which contain both the HTML and SVG components are to be processed, both the HTML unit 150 and the SVG unit 160 are loaded.

By implementing the above structure, a user can select so as to install only necessary functions, and can add or delete a function or functions at a later stage, as appropriate. Thus, the storage area of a recording medium, such as a hard disk, can be effectively utilized, and the wasteful use of memory can be prevented at the time of executing programs. Furthermore, since the capability of this structure is highly expandable, a developer can deal with new vocabularies in the form of plug-ins, and thus the development process can be readily facilitated. As a result, the user can also add a function or functions easily at low cost by adding a plug-in or plug-ins.

The editing unit 120 receives an event, which is an editing instruction, from the user via the user interface. Upon reception of such an event, the editing unit 120 notifies a suitable plug-in or the like of this event, and controls the processing so as to redo this event, cancel (undo) this event, etc.

The DOM unit 130 includes a DOM provider 132, a DOM builder 134 and a DOM writer 136. The DOM unit 130 realizes functions in compliance with a document object model (DOM), which is defined to provide an access method used for handling data in the form of an XML document. The DOM provider 132 is an implementation of a DOM that satisfies an interface defined by the editing unit 120. The DOM builder 134 generates DOM trees from XML documents. As will be described later, when an XML document to be processed is mapped to another vocabulary by the VC unit 180, a source tree, which corresponds to the XML document in a mapping source, and a destination tree, which corresponds to the XML document in a mapping destination, are generated. At the end of editing, for example, the DOM writer 136 outputs a DOM tree as an XML document.

The CSS unit 140, which provides a display function conforming to CSS, includes a CSS parser 142, a CSS provider 144 and a rendering unit 146. The CSS parser 142 has a parsing function for analyzing the CSS syntax. The CSS provider 144 is an implementation of a CSS object and performs CSS cascade processing on the DOM tree. The rendering unit 146 is a CSS rendering engine and is used to display documents, described in a vocabulary such as HTML, which are laid out using CSS.

The HTML unit 150 displays or edits documents described in HTML. The SVG unit 160 displays or edits documents described in SVG. These display/editing systems are realized in the form of plug-ins, and each system is comprised of a display unit (also designated herein as a "canvas") 156 and 166, which displays documents, a control unit (also designated herein as an "editlet") 152 and 162, which transmits and receives events containing editing commands, and an edit unit (also designated herein as a "zone") 154 and 164, which edits the DOM according to the editing commands. Upon the control unit 152 or 162 receiving a DOM tree editing command from an external source, the edit unit 154 or 164 modifies the DOM tree and the display unit 156 or 166 updates the display. These units have a structure similar to the framework of the so-called MVC (Model-View-Controller) pattern. With such a structure, in general, the display units 156 and 166 correspond to the "View". On the other hand, the control units 152 and 162 correspond to the "Controller", and the DOM instance corresponds to the "Model". The document processing apparatus 100 according to the present embodiment allows an XML document to be edited according to each given vocabulary, as well as providing a function of editing the HTML document in the form of a tree display. The HTML unit 150 provides a user interface for editing an HTML document in a manner similar to a word processor, for example. On the other hand, the SVG unit 160 provides a user interface for editing an SVG document in a manner similar to an image drawing tool.

The VC unit 180 includes a mapping unit 182, a definition file acquiring unit 184 and a definition file generator 186. The VC unit 180 performs mapping of a document, which has been described in a particular vocabulary, to another given vocabulary, thereby providing a framework that allows a document to be displayed and edited by a display/editing plug-in corresponding to the vocabulary to which the document is mapped. In the present embodiment, this function is called a vocabulary connection (VC). In the VC unit 180, the definition file acquiring unit 184 acquires a script file in which the mapping definition is described. Here, the definition file specifies the correspondence (connection) between the nodes for each node. Furthermore, the definition file may specify whether or not editing of the element values or attribute values is permitted. Furthermore, the definition file may include operation expressions using the element values or attribute values for the node. Detailed description will be made later regarding these functions. The mapping unit 182 instructs the DOM builder 134 to generate a destination tree with reference to the script file acquired by the definition file acquiring unit 184. This manages the correspondence between the source tree and the destination tree. The definition file generator 186 offers a graphical user interface which allows the user to generate a definition file.

The VC unit 180 monitors the connection between the source tree and the destination tree. Upon reception of an editing instruction from the user via a user interface provided by a plug-in that handles a display function, the VC unit 180 first modifies a relevant node of the source tree. As a result, the DOM unit 130 issues a mutation event indicating that the source tree has been modified. Upon reception of the mutation event thus issued, the VC unit 180 modifies a node of the destination tree corresponding to the modified node, thereby updating the destination tree in a manner that synchronizes with the modification of the source tree. Upon reception of a mutation event that indicates that the destination tree has been modified, a plug-in having functions of displaying/editing the destination tree, e.g., the HTML unit 150, updates a display with reference to the destination tree thus modified. Such a structure allows a document described in any vocabulary, even a minor vocabulary used in a minor user segment, to be converted into a document described in another major vocabulary. This enables such a document described in a minor vocabulary to be displayed, and provides an editing environment for such a document.

An operation in which the document processing apparatus 100 displays and/or edits documents will now be described below. When the document processing apparatus 100 loads a document to be processed, the DOM builder 134 generates a DOM tree from the XML document. The main control unit 110 or the editing unit 120 determines which vocabulary describes the XML document by referring to a name space of the XML document to be processed. If the plug-in corresponding to the vocabulary is installed in the document processing apparatus 100, the plug-in is loaded so as to display/edit the document. If, on the other hand, the plug-in is not installed in the document processing apparatus 100, a check shall be made to see whether a mapping definition file exists or not. And if the definition file exits, the definition file acquiring unit 184 acquires the definition file and generates a destination tree according to the definition, so that the document is displayed/edited by the plug-in corresponding to the vocabulary which is to be used for mapping. If the document is a compound document containing a plurality of vocabularies, relevant portions of the document are displayed/edited by plug-ins corresponding to the respective vocabularies, as will be described later. If the definition file does not exist, a source or tree structure of a document is displayed and the editing is carried out on the display screen.

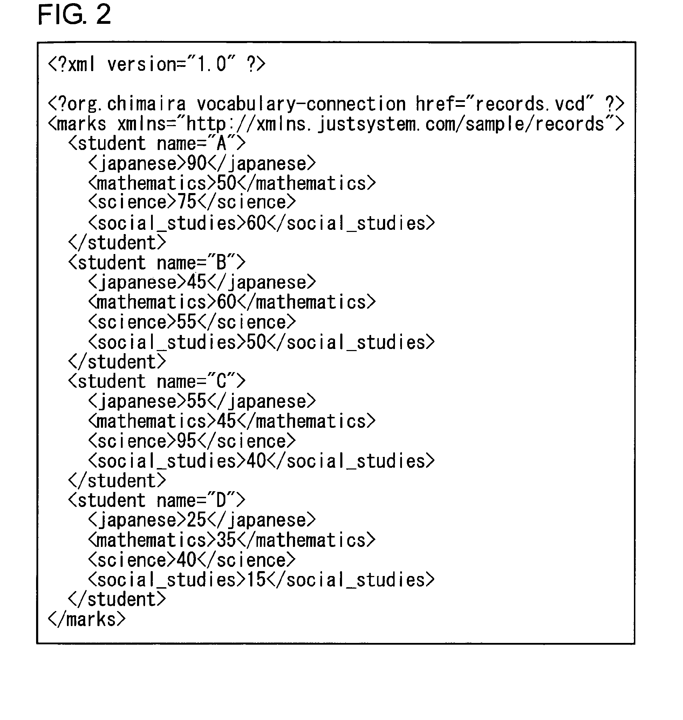

FIG. 2 shows an example of an XML document to be processed. According to this exemplary illustration, the XML document is used to manage data concerning grades or marks that students have earned. A component "marks", which is the top node of the XML document, includes a plurality of components "student" provided for each student under "marks". The component "student" has an attribute "name" and contains, as child elements, the subjects "japanese", "mathematics", "science", and "social_studies". The attribute "name" stores the name of a student. The components "japanese", "mathematics", "science" and "social_studies" store the test scores for the subjects Japanese, mathematics, science, and social studies, respectively. For example, the marks of a student whose name is "A" are "90" for Japanese, "50" for mathematics, "75" for science and "60" for social studies. Hereinafter, the vocabulary (tag set) used in this document will be called the "marks managing vocabulary".

Here, the document processing apparatus 100 according to the present exemplary embodiment does not have a plug-in which conforms to or handles the display/editing of marks managing vocabularies. Accordingly, before displaying such a document in a manner other than the source display manner or the tree display manner, the above-described VC function is used. That is, there is a need to prepare a definition file for mapping the document, which has been described in the marks managing vocabulary, to another vocabulary, which is supported by a corresponding plug-in, e.g., HTML or SVG. Note that description will be made later regarding a user interface that allows the user to create the user's own definition file. Now, description will be made below regarding a case in which a definition file has already been prepared.

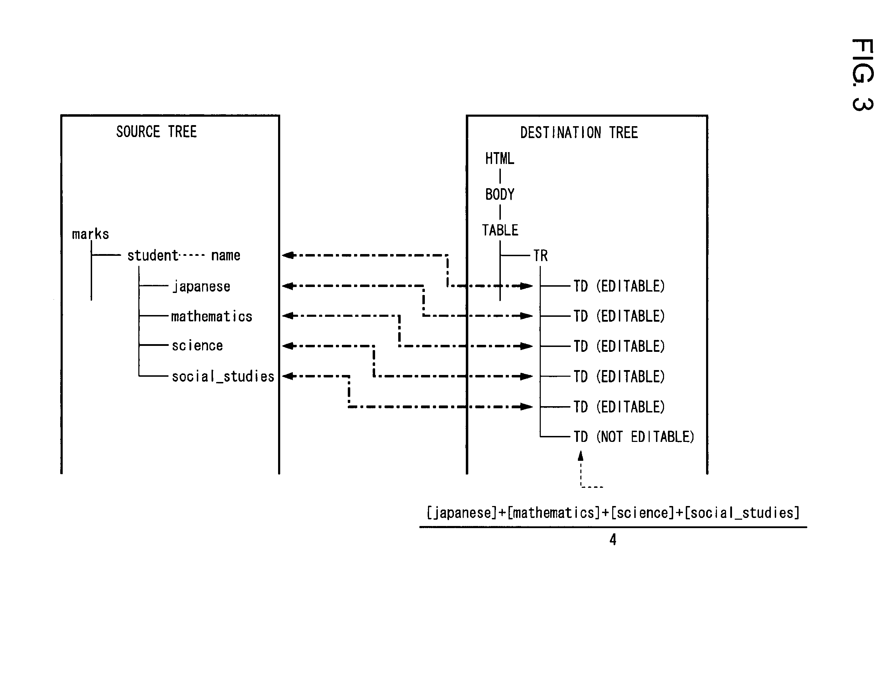

FIG. 3 shows an example in which the XML document shown in FIG. 2 is mapped to a table described in HTML. In an example shown in FIG. 3, a "student" node in the marks managing vocabulary is associated with a row ("TR" node) of a table ("TABLE" node) in HTML. The first column in each row corresponds to an attribute value "name", the second column to a "japanese" node element value, the third column to a "mathematics" node element value, the fourth column to a "science" node element value and the fifth column to a "social_studies" node element value. As a result, the XML document shown in FIG. 2 can be displayed in an HTML tabular format. Furthermore, these attribute values and element values are designated as being editable, so that the user can edit these values on a display screen using an editing function of the HTML unit 150. In the sixth column, mathematical expression is designated for calculating a weighted average of the marks for Japanese, mathematics, science and social studies, and average values of the marks for each student are displayed. In this manner, more flexible display can be effected by making it possible to specify the mathematical expression in the definition file, thus improving the users' convenience at the time of editing. In this example shown in FIG. 3, editing is designated as not being possible in the sixth column, so that the average value alone cannot be edited individually. Thus, in the mapping definition it is possible to specify editing or no editing so as to protect the users against the possibility of performing erroneous operations.

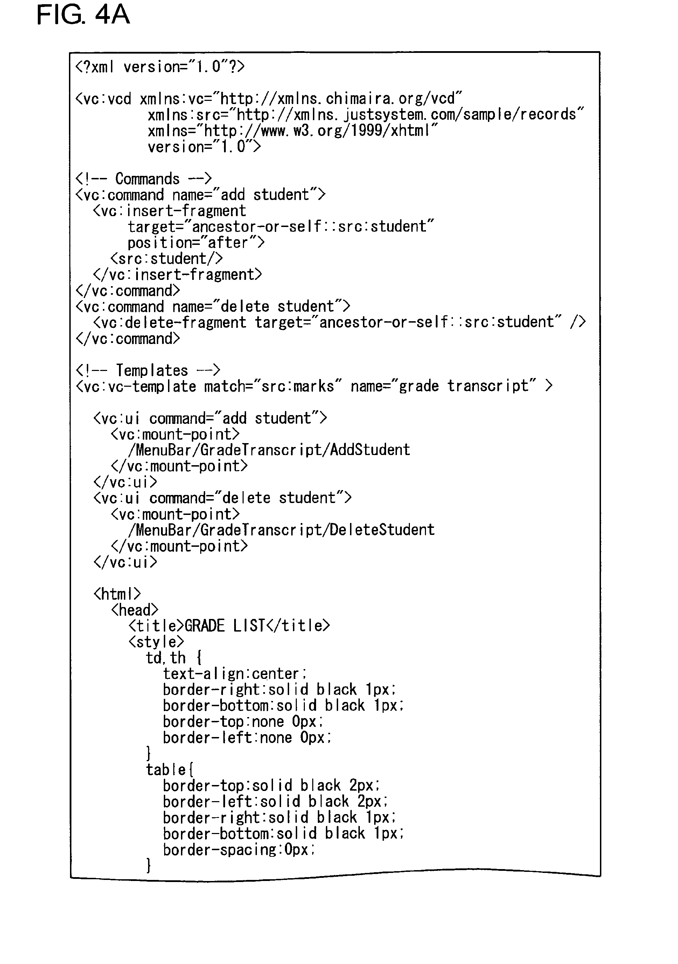

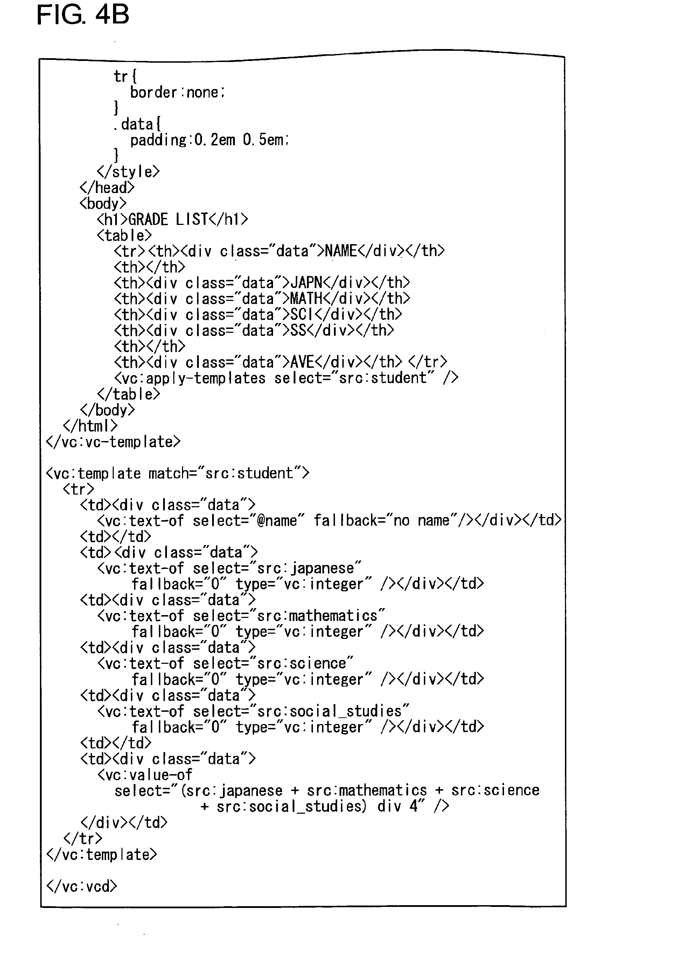

FIG. 4 illustrates an example of a definition file to map the XML document shown in FIG. 2 to the table shown in FIG. 3. This definition file is described in script language defined for use with definition files. In the definition file, definitions of commands and templates for display are described. In the example shown in FIG. 4, "add student" and "delete student" are defined as commands, and an operation of inserting a node "student" into a source tree and an operation of deleting the node "student" from the source tree, respectively, are associated with these commands. Furthermore, the definition file is described in the form of a template, which describes that a header, such as "name" and "japanese" is displayed in the first row of a table and the contents of the node "student" are displayed in the second and subsequent rows. In the template displaying the contents of the node "student", a term containing "text-of" indicates that editing is permitted, whereas a term containing "value-of" indicates that editing is not permitted. Among the rows where the contents of the node "student" are displayed, mathematical expression "(src:japanese + src:mathematics + scr:science + scr:social_studies) div 4" is described in the sixth row. This means that the average of the student's marks is displayed.

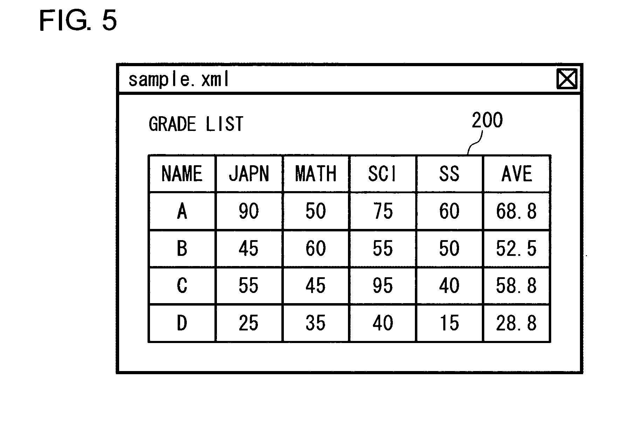

FIG. 5 shows an example of a display screen on which an XML document described in the marks managing vocabulary shown in FIG. 2 is displayed by mapping the XML document to HTML using the correspondence shown in Fig. 3. Displayed from left to right in each row of a table 200 are the name of each student, marks for Japanese, marks for mathematics, marks for science, marks for social studies and the averages thereof. The user can edit the XML document on this screen. For example, when the value in the second row and the third column is changed to "70", the element value in the source tree corresponding to this node, that is, the marks of student "B" for mathematics, are changed to "70". At this time, in order to have the destination tree follow the source tree, a relevant portion of the destination tree is changed accordingly, so that the HTML unit 150 updates the display based on the changed destination tree. Hence, the marks of student "B" for mathematics are changed to "70", and the average is changed to "55" in the table on the screen.

On the screen as shown in FIG. 5, commands like "add student" and "delete student" are displayed in a menu as defined in the definition file shown in FIG. 4. When the user selects a command from among these commands, a node "student" is added or deleted in the source tree. In this manner, with the document processing apparatus 100 according to the present embodiment, it is possible not only to edit the element values of components in a lower end of a hierarchical structure but also to edit the hierarchical structure. An edit function for editing such a tree structure may be presented to the user in the form of commands. Furthermore, a command to add or delete rows of a table may, for example, be linked to an operation of adding or deleting the node "student". A command to embed other vocabularies therein may be presented to the user. This table may be used as an input template, so that marks data for new students can be added in a fill-in-the-blank format. As described above, the VC function allows a document described in the marks managing vocabulary to be edited using the display/editing function of the HTML unit 150.

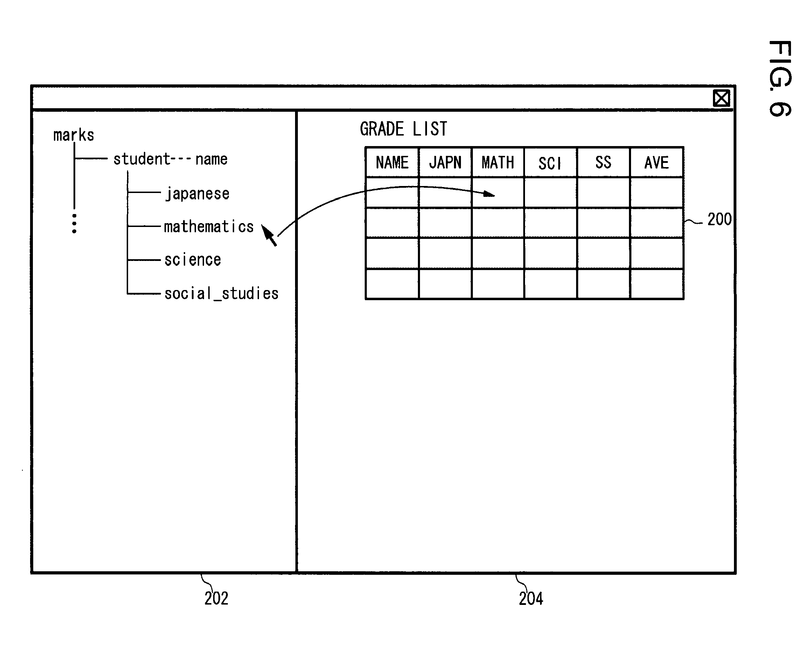

FIG. 6 shows an example of a graphical user interface, which the definition file generator 186 presents to the user, in order for the user to generate a definition file. An XML document to be mapped is displayed in a tree in a left-hand area 202 of a screen. The screen layout of an XML document after mapping is displayed in a right-hand area 204 of the screen. This screen layout can be edited by the HTML unit 150, and the user creates a screen layout for displaying documents in the right-hand area 204 of the screen. For example, a node of the XML document which is to be mapped, which is displayed in the left-hand area 202 of the screen, is dragged and dropped into the HTML screen layout in the right-hand area 204 of the screen using a pointing device such as a mouse, so that a connection between a node at a mapping source and a node at a mapping destination is specified. For example, when "mathematics," which is a child element of the element "student," is dropped at the intersection of the first row and the third column in a table 200 on the HTML screen, a connection is established between the "mathematics" node and a "TD" node in the third column. Either editing or no editing can be specified for each node. Moreover, the mathematical expression can be embedded in a display screen. When the screen editing is completed, the definition file generator 186 generates definition files, which describe the connections between the screen layout and the nodes.

Viewers or editors which can handle major vocabularies such as XHTML, MathML and SVG have already been developed. However, it does not serve any practical purpose to develop dedicated viewers or editors for such documents described in the original vocabularies as shown in FIG. 2. If, however, the definition files for mapping to other vocabularies are created as mentioned above, the documents described in the original vocabularies can be displayed and/or edited by utilizing the VC function without the need to develop a new viewer or editor.

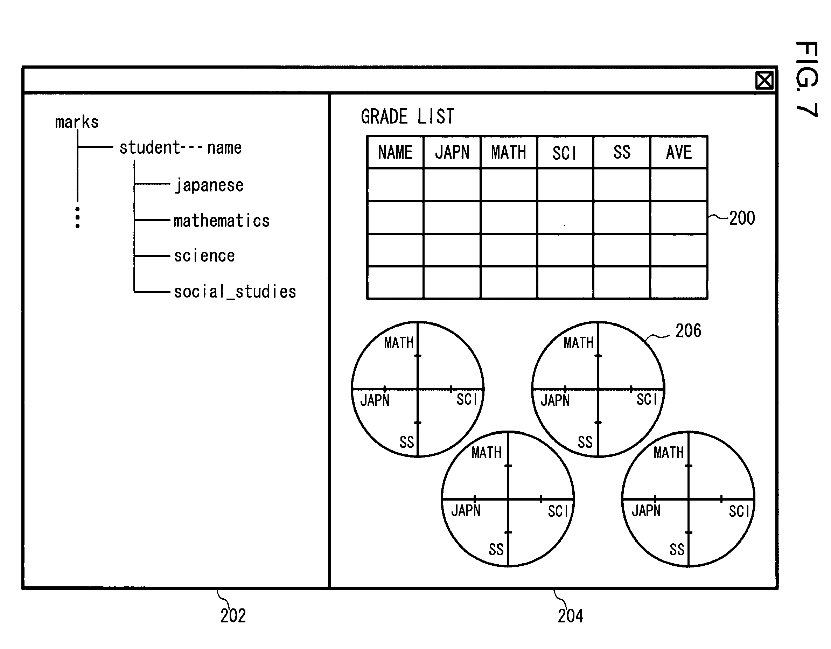

FIG. 7 shows another example of a screen layout generated by the definition file generator 186. In the example shown in FIG. 7, a table 200 and circular graphs 206 are created on a screen for displaying XML documents described in the marks managing vocabulary. The circular graphs 206 are described in SVG. As will be discussed later, the document processing apparatus 100 according to the present exemplary embodiment can process a compound document described in the form of a single XML document according to a plurality of vocabularies. That is why the table 200 described in HTML and the circular graphs 206 described in SVG can be displayed on the same screen.

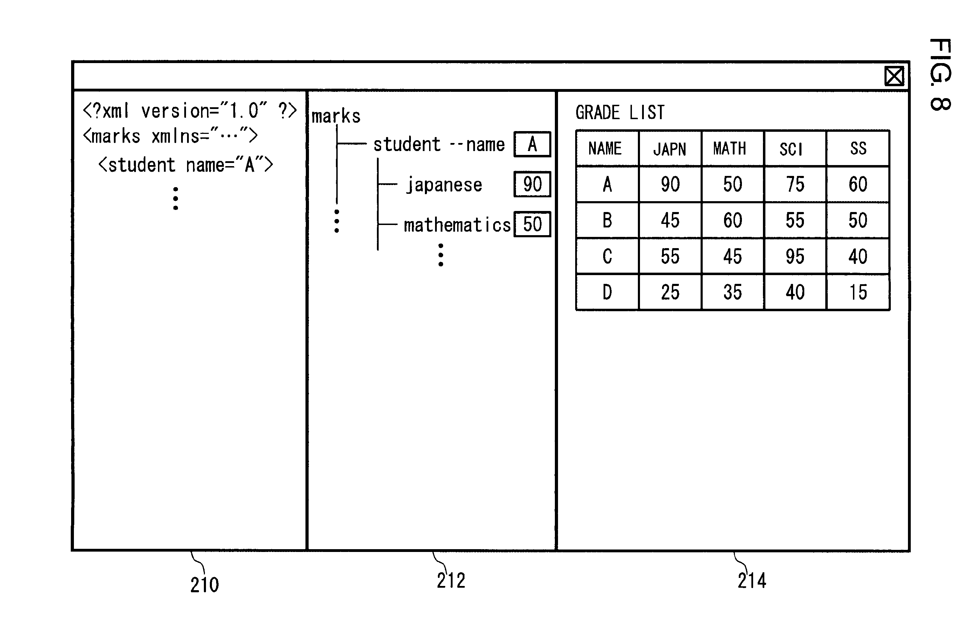

FIG. 8 shows an example of a display medium, which in a preferred but non-limiting embodiment is an edit screen, for XML documents processed by the document processing apparatus 100. In the example shown in FIG. 8, a single screen is partitioned into a plurality of areas and the XML document to be processed is displayed in a plurality of different display formats at the respective areas. The source of the document is displayed in an area 210, the tree structure of the document is displayed in an area 212, and the table shown in FIG. 5, and described in HTML, is displayed in an area 214. The document can be edited in any of these areas, and when the user edits content in any of these areas, the source tree will be modified accordingly, and then each plug-in that handles the corresponding screen display updates the screen so as to effect the modification of the source tree. Specifically, display units of the plug-ins in charge of displaying the respective edit screens are registered in advance as listeners for mutation events that provide notice of a change in the source tree. When the source tree is modified by any of the plug-ins or the VC unit 180, all the display units, which are displaying the edit screen, receive the issued mutation event(s) and then update the screens. At this time, if the plug-in is executing the display through the VC function, the VC unit 180 modifies the destination tree following the modification of the source tree. Thereafter, the display unit of the plug-in modifies the screen by referring to the destination tree thus modified.

For example, when the source display and tree-view display are implemented by dedicated plug-ins, the source-display plug-in and the tree-display plug-in execute their respective displays by directly referring to the source tree without involving the destination tree. In this case, when the editing is done in any area of the screen, the sourcedisplay plug-in and the tree-display plug-in update the screen by referring to the modified source tree. Also, the HTML unit 150, in charge of displaying the area 214, updates the screen by referring to the destination tree, which has been modified following the modification of the source tree.

The source display and the tree-view display can also be realized by utilizing the VC function. That is to say, an arrangement may be made in which the source and the tree structure are laid out in HTML, an XML document is mapped to the HTML structure thus laid out, and the HTML unit 150 displays the XML document thus mapped. In such an arrangement, three destination trees are generated: one in the source format, one in the tree format, and one in the table format. If the editing is carried out in any of the three areas on the screen, the VC unit 180 modifies the source tree and, thereafter, modifies the three destination trees, in the source format, the tree format, and the table format. Then, the HTML unit 150 updates the three areas of the screen by referring to the three destination trees.

In this manner, a document is displayed on a single screen in a plurality of display formats, thus improving the convenience to a user. For example, the user can display and edit a document in a visually easy-to-understand format using the table 200 or the like, while understanding the hierarchical structure of the document by the source display or the tree display. In the above example, a single screen is partitioned into a plurality of display formats, and they are displayed simultaneously. Also, a single display format may be displayed on a single screen so that the display format can be switched according to the user's instructions. In this case, the main control unit 110 receives from the user a request to switch the display format, and then instructs the respective plug-ins to switch the display.

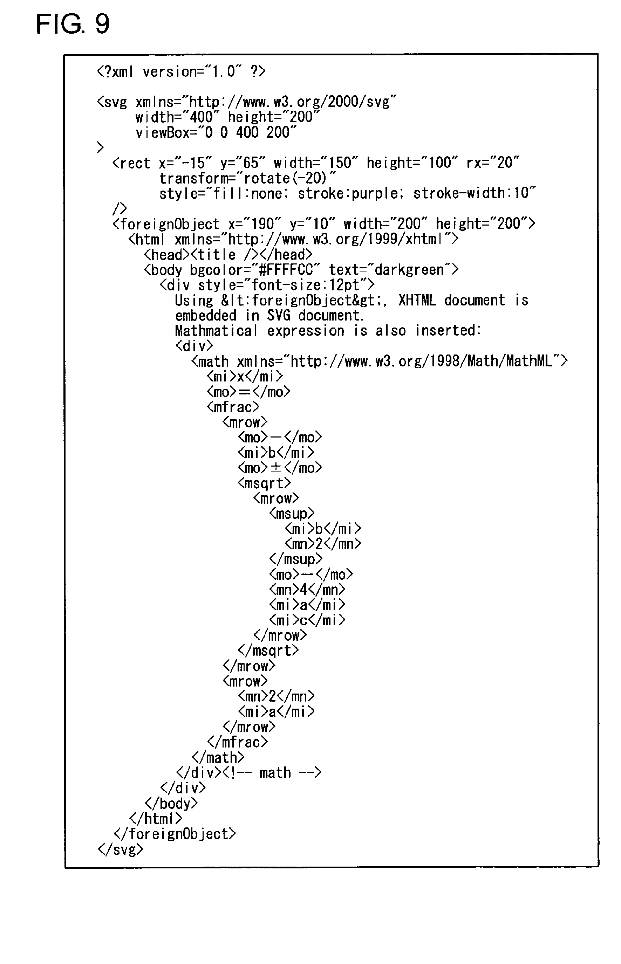

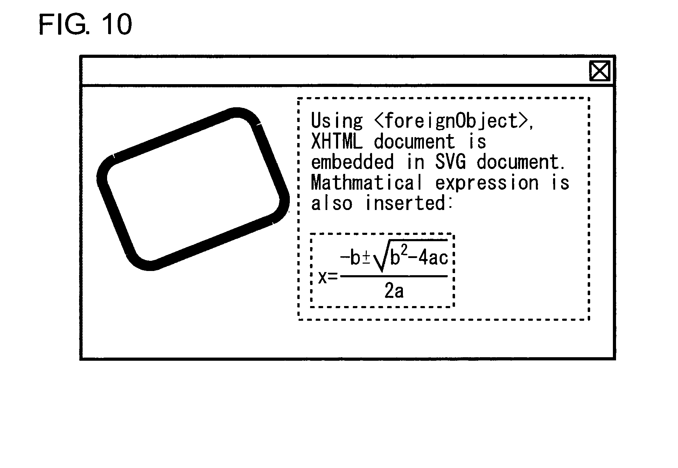

FIG. 9 illustrates another example of an XML document edited by the document processing apparatus 100. In the XML document shown in FIG. 9, an XHTML document is embedded in a "foreignObject" tag of an SVG document, and the XHTML document contains an equation described in MathML. In this case, the editing unit 120 assigns the rendering job to an appropriate display system by referring to the name space. In the example illustrated in FIG. 9, first, the editing unit 120 instructs the SVG unit 160 to render a rectangle, and then instructs the HTML unit 150 to render the XHTML document. Furthermore, the editing unit 120 instructs a MathML unit (not shown) to render an equation. In this manner, a compound document containing a plurality of vocabularies is appropriately displayed. FIG. 10 illustrates the resulting display.

The displayed menu may be switched corresponding to the position of the cursor (carriage) during the editing of a document. That is, when the cursor lies in an area where an SVG document is displayed, the menu provided by the SVG unit 160, or a command set which is defined in the definition file for mapping the SVG document, is displayed. On the other hand, when the cursor lies in an area where the XHTML document is displayed, the menu provided by the HTML unit 150 is displayed, or alternatively, a command set which is defined in the definition file for mapping the HTML document is displayed. Thus, an appropriate user interface can be presented according to the editing position.

In the case that there is neither a plug-in nor a mapping definition file suitable for any one of the vocabularies according to which the compound document has been described, a portion of the compound document described in this vocabulary may be displayed in source or in tree format. In the conventional practice, when a compound document is to be opened which contains an embedded document, the contents cannot be displayed without the installation of an application to display the embedded document. According to the present embodiment, however, the XML documents, which are composed of text data, may be displayed in source or in tree format so that the contents of the documents can be ascertained. This is a characteristic of the text-based XML documents or the like.

Another advantageous aspect of the data being described in a text-based language, for example, is that, in a single compound document, a part of the compound document described in a given vocabulary can be used as reference data for another part of the same compound document described in a different vocabulary. Furthermore, when a search is made within the document, a string of characters embedded in a drawing, such as SVG, may also be search candidates.

In a document described in a particular vocabulary, tags belonging to other vocabularies may be used. Though such an XML document is generally not valid, it can be processed as a valid XML document as long as it is wellformed. In such a case, the tags thus inserted that belong to other vocabularies may be mapped using a definition file. For instance, tags such as "Important" and "Most Important" may be used so as to display a portion surrounding these tags in an emphasized manner, or may be sorted out in the order of importance.

When the user edits a document on an edit screen as shown in FIG. 10, a plug-in or a VC unit 180, which is in charge of processing the edited portion, modifies the source tree. A listener for mutation events can be registered for each node in the source tree. Normally, a display unit of the plug-in or the VC unit 180 conforming to a vocabulary that belongs to each node is registered as the listener. When the source tree is modified, the DOM provider 132 traces upward in the node hierarchy from the modified node. If there is a registered listener, the DOM provider 132 issues a mutation event to the listener. For example, referring to the document shown in FIG. 9, if a node which lies lower than the <html> node is modified, the mutation event is sent in a notification to the HTML unit 150, which is registered as a listener to the <html> node. At the same time, the mutation event is also sent in a notification to the SVG unit 160, which is registered as a listener to an <svg> node, which lies above the <html> node. At this time, the HTML unit 150 updates the display by referring to the modified source tree. Since the nodes belonging to the vocabulary of the SVG unit 160 itself are not modified, the SVG unit 160 may disregard the mutation event.

Depending on the contents of the editing, modification of the display by the HTML unit 150 may change the overall layout. In such a case, the layout is updated by a screen layout management mechanism, e.g., the plug-in that handles the display of the highest node updates the display in increments of display regions, which are displayed according to the respective plug-ins. For example, in a case of expanding a display region managed by the HTML unit 150, first the HTML unit 150 renders a part managed by the HTML unit 150 itself, and determines the size of the display region. Then, the size of the display area is sent in a notification to the component that manages the screen layout so as to request the updating of the layout. Upon receipt of this notice, the component that manages the screen layout rebuilds the layout of the display area for each plug-in. Accordingly, the display of the edited portion is appropriately updated and the overall screen layout is updated.

Description has been made regarding the present invention with reference to the embodiments. The above particular embodiments have been described for exemplary purposes only, and are by no means intended to be interpreted restrictively. Rather, it can be readily conceived by those skilled in this art that various modifications may be made by making various combinations of the aforementioned components, which are also encompassed in the technical scope of the present invention.

Although the aforementioned embodiment describes an arrangement in which an XML document is processed, the document processing apparatus 100 according to the aforementioned embodiment also is capable of processing a document described in other markup languages such as SGML, HTML, etc., in the same way.

### Industrial Applicability

The present invention may be applied to a document processing apparatus for processing a document described in a markup language.

## Claims

1. A document processing apparatus, comprising:
a plurality of processing systems operable to process a document described in a predetermined markup language,
wherein a document described in a plurality of kinds of markup languages is displayed on a single screen using said plurality of processing systems corresponding to said plurality of kinds of markup languages, so as to allow a user to edit said document.

2. A document processing apparatus according to Claim 1, further comprising a conversion unit which, in a case that said markup languages describing said document include a particular markup language which cannot be processed by any one of said processing systems, is operable to map the part of the document described in said particular markup language to another markup language which can be processed by said processing systems.

3. A document processing apparatus according to Claim 1, wherein, in a case that said markup languages describing said document include a particular markup language which cannot be processed by any one of said processing systems, the part of said document described in said particular markup language is displayed in the form of a source display or a tree display.

4. A document processing apparatus according to any one of Claims 1 through 3, wherein an editing menu is provided by a corresponding processing system, said editing menu operable to edit a particular markup language describing the part of said document corresponding to the current editing position.

5. A document processing apparatus according to any one of Claims 1 through 4, wherein a part described in a particular markup language can refer to data of the part described in another markup language in a document described in a plurality of kinds of markup languages.

6. A document processing method, comprising:
displaying a document described in a plurality of kinds of markup languages on a single screen, using a plurality of processing systems, each one of said processing systems corresponding to one of the plurality of kinds of markup languages; and
allowing a user to edit said document.

7. A computer program that provides a computer with a function of displaying a document described in a plurality of kinds of markup languages on a single screen using a plurality of processing systems respectively corresponding to said markup languages, which allows the user to edit said document.
